# FASCICULE DE BREVET EUROPEEN

(11) **EP 1 307 400 B1**
(45) Date de publication et mention de la délivrance du brevet: **27.07.2005**
(21) Numéro de dépôt: 01953706.7
(22) Date de dépôt: 02.08.2001
(51) Int. Cl.: C01B 25/22, C01B 25/222

(54) **PROCEDE DE PRODUCTION D'ACIDE PHOSPHORIQUE**
VERFAHREN ZUR ERZEUGUNG VON PHOSPHORSÄURE
METHOD FOR PRODUCING PHOSPHORIC ACID

(30) Priorité: 03.08.2000 BE 200000489
(43) Date de publication de la demande: 07.05.2003
(73) Titulaire: Ecophos, 1348 Louvan-la-Neuve (BE)
(72) Inventeur: TAKHIM, Mohamed, Khouribga (MA)
(74) Mandataire: Claeys, Pierre
(86) Numéro de dépôt international: PCT/BE2001/000128
(87) Numéro de publication internationale: WO 2002/012120

(56) Documents cités:
- EP-A- 0 087 323
- FR-A- 1 082 404
- FR-A- 2 343 696
- US-A- 3 323 864
- DATABASE CHEMABS [en ligne] CHEMICAL ABSTRACTS SERVICE, COLUMBUS, OHIO, US; DIAZ NOGUEIRA, EDUARDO ET AL: "Wet process for manufacture of phosphoric acid from phosphate rock using hydrochloric acid" retrieved from STN Database accession no. 114:65256 CA XP002164688 & ES 2 013 211 A (ERCROS S. A., SPAIN) 16 avril 1990 (1990-04-16)

## Description

La présente invention est relative à un procédé de production d'acide phosphorique au départ de minerais phosphatés.

La production d'acide phosphorique, si l'on exclut la synthèse, se fait aujourd'hui principalement par deux méthodes : soit par la voie "sèche", énergivore, des fours à haute température "minerais-coke-silice", suivie du barbotage dans H₂O du P₂O₅ qui est extrait, soit par la voie "humide" d'attaque par un acide, principalement l'acide sulfurique, mais aussi les acides nitrique, chlorhydrique ou perchlorique de minerais de phosphate préconditionnés (calcination, broyage, tamisage), avec obtention d'une solution d'acide phosphorique brut. Les sels de Ca formés, suivant l'acide d'attaque, sont éliminés par cristallisation des sulfates (de 80°C à 110°C) ou des nitrates (à une température <-5°C et d'une filtrabilité faible) ou encore en procédant à une extraction liquide/liquide de l'acide phosphorique en le séparant des chlorures de calcium.

Le produit résultant de ces attaques à l'acide contient toutes les impuretés existant déjà dans le minerai extrait. Ces impuretés contaminent ensuite non seulement l'acide phosphorique produit mais aussi les sels cristallisés ou séparés par extraction. Cette contamination est telle qu'elle rend ces sels difficiles, sinon impossibles à valoriser. Il existe à l'heure actuelle un réel problème dans la valorisation du gypse formé lors de l'attaque sulfurique. Il faut savoir que la production de 1 tonne de H₃PO₄ exprimée en P₂O₅ entraîne la production de plus ou moins 5 tonnes de gypse sous une forme difficilement valorisable à l'heure actuelle.

Par ailleurs, ces attaques nécessitent toutes un préconditionnement coûteux. Un broyage fin du minerai extrait est par exemple absolument nécessaire si l'on veut obtenir un rendement correct par l'attaque sulfurique.

La plupart de ces procédés entraînent des réactions à haute température qui nécessitent un refroidissement coûteux. Le contrôle de la température dans les réactions d'attaque liquide-solide sont difficiles à contrôler et l'agressivité de ces milieux d'attaque à température élevée est très importante envers l'équipement.

On connaît par ailleurs divers procédés comportant une attaque du minerai par de l'acide phosphorique ou par un mélange de plusieurs acides dont l'un est de l'acide phosphorique (FR-A-2.343.696, US-A-3.323.864, FR-1.082.404 et EP-A-0 087 323). Ces procédés font tous intervenir après cette attaque une précipitation d'un sel de calcium dans le produit obtenu par l'intermédiaire d'un acide. Dans certains de ces procédés le sel de calcium précipité contient encore les impuretés d'origine du minerai, dans d'autres l'acide utilisé ou un des acides utilisés est de l'acide fluorhydrique ou de l'acide fluosilicique, qui sont des acides coûteux, qu'il est nécessaire de recycler et dont la manipulation est dangereuse étant donné leur toxicité.

La présente invention a pour objet un procédé de production d'acide phosphorique permettant de valoriser au maximum les sous-produits, ou en tout cas de diminuer fortement le coût de leur élimination, tout en proposant un rendement en acide phosphorique équivalent ou supérieur à ceux prévus par les procédés connus. Le procédé a aussi pour but de produire un acide phosphorique approprié pour la production des engrais ainsi que pour des applications industrielles, et cela aussi en vue d'obtenir un acide phosphorique purifié.

Avantageusement, ce procédé doit permettre d'éviter avant l'attaque un broyage ou une calcination du minerai extrait. De préférence, le procédé suivant l'invention va pouvoir se passer à une température aisément contrôlable et dans des conditions, qui permettent des réactions peu agressives pour l'équipement utilisé, ainsi qu'une maîtrise des dosages.

On a résolu ces problèmes suivant l'invention par un procédé de production d'acide phosphorique, comprenant
- au moins une attaque de minerai de phosphate par un liquide d'attaque contenant des ions phosphate en solution, avec formation d'un produit d'attaque, et
- une séparation dans le produit d'attaque entre une phase solide insoluble contenant des impuretés et une phase liquide présentant en solution des ions phosphate et des ions calcium,
caractérisé en ce qu'il comprend en outre
- une introduction dans la phase liquide séparée d'un acide qui est plus fort que l'acide phosphorique et qui forme, avec les ions calcium précités, un sel de calcium soluble, et
- un isolement d'une solution de ce sel de calcium, non contaminée par les impuretés, avec obtention d'une solution d'acide phosphorique.

L'acide peut par exemple être dans ce cas de l'acide chlorhydrique et l'on obtient alors, comme sel, du chlorure de calcium non contaminé par les impuretés du minerai qui est un produit valorisable, par exemple comme produit d'épandage pour les routes verglacées. On peut aussi envisager, comme acide de ce genre, de l'acide perchlorique, de l'acide nitrique, etc. Ce procédé présente le grand avantage d'une attaque du minerai non broyé par un acide faible et d'une élimination des impuretés, habituellement rencontrées dans les minerais de phosphate, dès la fin de l'attaque par un acide, l'acide phosphorique en l'occurrence. Ces impuretés sont par exemple Fe, Si, U, Cd, As, F, etc...; elles ne sont que peu dissoutes lors de l'attaque phosphorique du minerai suivant l'invention. Seul l'ion Ca⁺⁺, dont la teneur est relativement importante dans le minerai (jusqu'à 50 %), est entraîné en solution en présence des ions phosphate, en formant en particulier à une température proche de la température ambiante du dihydrogénophosphate de Ca. Cela permet à la fin du procédé suivant l'invention une séparation entre un sel de calcium pur et une solution d'acide phosphorique, le sous-produit à base de calcium pouvant ainsi être beaucoup plus facilement valorisé étant donné son haut degré de pureté. Les impuretés précitées se présentent enfin sous la forme d'un résidu solide concentré, facilement stockable, du fait de son volume réduit.

En outre, un broyage fin du minerai ne s'avère pas nécessaire préalablement à l'attaque. Suivant l'invention, le dihydrogénophosphate de calcium étant soluble, la réaction d'attaque du minerai se poursuit jusqu'au coeur des grains de celui-ci, ce qui augmente significativement la vitesse de réaction.

Cette attaque par l'acide phosphorique permet ainsi de transformer en dihydrogénophosphate de Ca environ 78 % du P₂O₅ présent dans le minerai, ce qui est un très bon rendement. Celui-ci peut être encore amélioré, jusqu'à environ 95-98 %, par une seconde attaque par H₃PO₄ du gâteau d'impuretés, après séparation par sédimentation et/ou filtration.

Par liquide d'attaque contenant des ions phosphate en solution, il faut entendre une solution ou suspension de préférence aqueuse, contenant de l'acide phosphorique et/ou des dérivés d'acide phosphorique qui à l'état dissous génèrent des ions phosphate. La solution ou suspension peut contenir aussi d'autres ions en solution ou présenter une fraction d'insolubles en suspension.

Avantageusement, le liquide d'attaque suivant l'invention est une solution aqueuse d'acide phosphorique qui, de préférence, présente une teneur en P₂O₅ de 20-35 %, avantageusement de 22 à 32 %, en particulier de 30 %.

L'attaque du minerai et la séparation de la phase liquide contenant des ions phosphate et calcium en solution s'effectue avantageusement à une température de 10 à 70°C, de préférence de 25 à 45°C, en particulier à environ 25°C.

Suivant une forme de réalisation avantageuse de l'invention, la séparation est effectuée par décantation du produit d'attaque. D'une manière préférentielle, la phase solide insoluble séparée est formée d'une phase solide à grains grossiers qui sédimente, la phase liquide séparée présentant en solution des ions phosphate et des ions calcium comporte une suspension de phase solide insoluble à grains fins, et le procédé comprend en outre une élimination des grains fins en suspension par clarification de la phase liquide séparée, avant l'étape d'introduction précitée de l'acide. Ce mode de réalisation permet une séparation rapide, peu coûteuse et extrêmement poussée de la phase solide contenant les impuretés.

Les opérations de séparation des reliquats solides composés de grains inattaqués et de stériles (métaux lourds), sont effectués par les procédés classiques de traitement de minerais : floculation, sédimentation, filtration.

Le dimensionnement des équipements nécessaires à ces opérations est conditionné principalement par la granulométrie des reliquats et leurs charges en stériles.

A titre indicatif, les résultats d'analyses comparées du minerai avant traitement et des reliquats résultant de la décantation et/ou filtration, donnent les teneurs suivantes (en mg/kg) en certains métaux lourds.

| | Minerai avant traitement | Reliquat à grains fins | Reliquat à gros grains |
|---|---|---|---|
| Cr | 140 ppm | 330 ppm | 180 ppm |
| Al | 0,5 % | 1,54 % | 1,18 % |
| Fe | 0,33 % | 1,96 % | 0,711 % |
| F | 3,5 % | 16,39 % | 6,99 % |
| Si | 2,5 % | 4,55 % | 12,8 % |

Suivant un mode de réalisation perfectionné de l'invention, le procédé comprend au moins une attaque supplémentaire de la phase solide séparée par un liquide d'attaque supplémentaire contenant des ions phosphate en solution, avec formation d'au moins un produit d'attaque supplémentaire, et une séparation supplémentaire de celui-ci entre une phase solide insoluble supplémentaire et une phase liquide supplémentaire contenant en solution des ions phosphate. On peut ainsi augmenter le rendement du procédé et diminuer encore davantage le volume des résidus.

Avantageusement, suivant l'invention, au moins une partie du liquide d'attaque et/ou du liquide d'attaque supplémentaire comprend au moins une partie de la phase liquide résultant de ladite étape de séparation et/ou de ladite étape de séparation supplémentaire et/ou au moins une partie de la solution d'acide phosphorique. On peut ainsi effectuer l'étape d'attaque, en introduisant dans celle-ci, comme matière fraîche, uniquement du minerai et un solvant tel que de l'eau. Le liquide d'attaque ainsi que le liquide d'attaque supplémentaire peuvent être formés uniquement d'un ou de plusieurs liquides recyclés, issus du procédé suivant l'invention lui-même.

Le filtrat résultant de la phase d'attaque, puis de séparation, contient du dihydrogénophosphate de calcium.

Dans la seconde phase du procédé, l'étape dite d'introduction, le filtrat est traité par un acide fort de manière à générer de l'acide phosphorique à partir du dihydrogénophosphate de Ca par déplacement de son ion basique.

Les différentes opérations intervenant dans cette seconde phase conduiront à la production d'un acide phosphorique, généralement à faible concentration (de l'ordre de 30 %).

Le choix de l'acide fort utilisé, est déterminé principalement par des critères d'ordre économique (disponibilité, sécurité des approvisionnements, coût) et également des considérations d'ordre écologique relatives à la destination des sous-produits (stockage ou valorisation).

Le choix de l'acide permettant une séparation du H₃PO₄ est fonction de la solubilité en milieu aqueux du sel de calcium résultant de l'attaque du dihydrogénophosphate de calcium par cet acide.

Suivant un mode perfectionné de réalisation de l'invention, l'étape d'isolement comprend, dans la phase liquide séparée traitée par l'acide, une solubilisation de l'acide phosphorique dans un solvant organique, non miscible à l'eau, pour former une phase organique contenant de l'acide phosphorique et une phase aqueuse contenant le sel de Ca en solution, et, dans la phase organique, une extraction par de l'eau pour former ladite solution aqueuse d'acide phosphorique. Comme solvant organique, on peut utiliser n'importe quel solvant approprié pour une extraction liquide-liquide dans lequel l'acide phosphorique est soluble et le sel de Ca est insoluble dans les conditions d'extraction. Comme solvant organique, on peut envisager avantageusement un alcool aliphatique, par exemple du n-butanol, ...

Le traitement par de l'acide chlorhydrique s'effectue avantageusement à une température comprise entre 10 et 45°C, avantageusement entre 20 et 30°C, de préférence à environ 25°C.

Le traitement par l'acide chlorhydrique peut avantageusement s'effectuer en même temps que l'introduction du solvant organique.

La phase organique issue de ce traitement contient H₃PO₄ et HCl. Elle est séparée de la phase aqueuse contenant en solution CaCl₂ et elle est ensuite avantageusement soumise à deux opérations de lavage successives.

Le premier lavage par une solution de dihydrogénophosphate de Ca permet d'éliminer HCl. Le rendement de cette opération est fonction de la teneur en P₂O₅ de la solution de dihydrogénophosphate de Ca.

La phase organique issue de cette première opération de lavage pourra être éventuellement purifiée par une solution d'acide phosphorique à 30 % de P₂O₅, afin d'éliminer les traces de quelques métaux lourds résiduels.

La phase organique issue de ces différentes opérations de purification ne contient plus que H₃PO₄. L'extraction du H₃PO₄ sera réalisée par transfert en phase aqueuse par addition d'eau au solvant organique et séparation des deux phases liquides : solvant organique/eau. Les conditions optimales de cette séparation sont déterminées par l'exploitation du diagramme ternaire H₃PO₄ - solvant organique - H₂O en fonction de la concentration d' H₃PO₄ dans le solvant organique. Au terme de cette séparation des deux phases liquides, le solvant organique est recyclé à un étage antérieur du processus et H₃PO₄ en solution aqueuse peut être concentré par distillation.

Avantageusement, suivant l'invention, une fraction de la solution aqueuse d'acide est recyclée dans la phase d'attaque du minerai. La fraction restante peut être concentrée par évaporation pour donner un acide phosphorique, par exemple de qualité marchande, notamment de concentration de 54-60 % de P₂O₅.

D'autres modes de réalisation avantageux du procédé suivant l'invention sont indiqués dans les revendications annexées.

L'invention va à présent être décrite de manière plus détaillée à l'aide d'exemples de réalisation non limitatifs.

### Exemple 1

### Attaque phosphorique

On procède à une attaque d'un minerai de phosphate présentant une teneur en P₂O₅ de 36,54 % et une teneur en Ca de 38,63 %. Ce minerai est tel qu'extrait. Il a subi uniquement un triage de manière à en éliminer au maximum les déchets non phosphatés.
Il est amené dans un réacteur muni d'un agitateur dans lequel on introduit une solution aqueuse d'acide phosphorique à 30 % de P₂O₅. Une digestion a lieu dans le réacteur pendant une durée de 15 minutes à la température ambiante avec formation d'une masse de produit d'attaque en forme de pulpe. Pendant cette digestion, l'acide phosphorique attaque le minerai pour former du dihydrogénophosphate de calcium [Ca(H₂PO₄)₂] qui est soluble dans l'eau.
Les conditions de digestion sont établies de manière à éviter toute précipitation de phosphate de calcium. Ces conditions sont bien connues dans la technique et elles dépendent notamment de la température appliquée et de la concentration en P₂O₅ de l'acide.
Après l'attaque dans le réacteur, la pulpe subit une opération de séparation. Dans cet exemple de réalisation, cette séparation comprend tout d'abord un transvasement de la pulpe dans un décanteur où elle séjourne pendant une période de 10 minutes.
On obtient ainsi un liquide surnageant contenant des grains fins en suspension. Dans cet exemple de réalisation, le liquide est ensuite soumis à une clarification par filtration au travers d'un papier-filtre. Le filtrat obtenu (Ech. 1) est une solution aqueuse d'acide phosphorique à environ 30,5 % de PO₂, qui contient 3,26 % de Ca et qui est largement débarrassée des impuretés, telles que Fe, F, Si, etc. Ce filtrat forme au moins en partie la phase liquide qui, suivant l'invention, va être soumise à un traitement par un acide.
Pour augmenter le rendement, on peut prévoir en outre un lavage par de l'eau du dépôt de gros grains qui a sédimenté au fond du décanteur. Dans cet exemple de réalisation, on a prévu quatre lavages successifs, chacun par de l'eau, pendant cinq minutes, puis une filtration. On obtient un gâteau de grains grossiers lavés (Ech. 3).
Le surnageant de chacun des lavages et le filtrat sont réunis et à nouveau filtrés. On obtient ainsi un gâteau de grains fins (Ech. 2) et un filtrat liquide (Ech. 4).
Les teneurs en différentes matières des produits de cette attaque ont été analysées et sont indiquées dans le tableau I ci-dessous.

**Tableau I**

| Produit | P₂O₅ % | Ca % | Fe ppm | F % | Si % |
|---|---|---|---|---|---|
| Minerai | 36,54 | 38,63 | 3320 | 3,5 | 2,5 |
| Ech. 1 | 30,52 | 3,26 | 28 | 0,0779 | - |
| Ech. 2 | 32,94 | 19,01 | 25064 | 16,39 | 4,55 |
| Ech. 3 | 26,61 | 29,99 | 11906 | 6,99 | 12,8 |
| Ech.4 | 1,64 | 0,2568 | 2 | - | - |

Comme on peut aisément le constater, le produit Ech. 1, qui est un échantillon de la phase liquide qui va ultérieurement subir un traitement par un acide, ne contient plus que des traces d'impuretés et présente une teneur en P₂O₅ d'environ 30 %.

### Exemple 2

### Attaque phosphorique

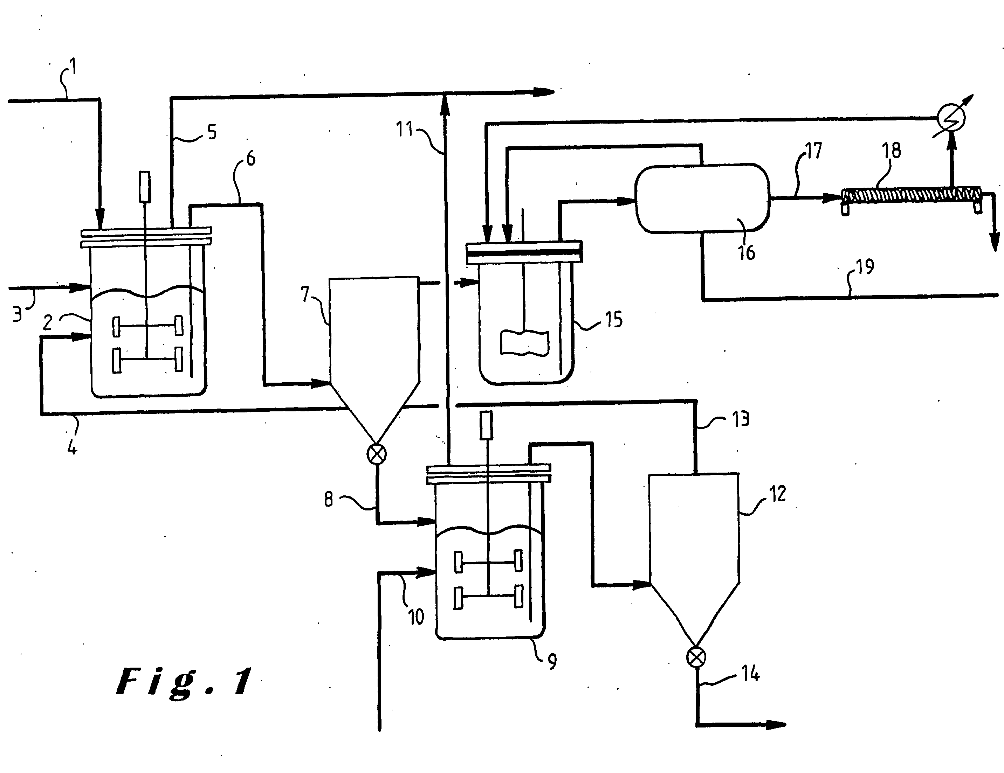

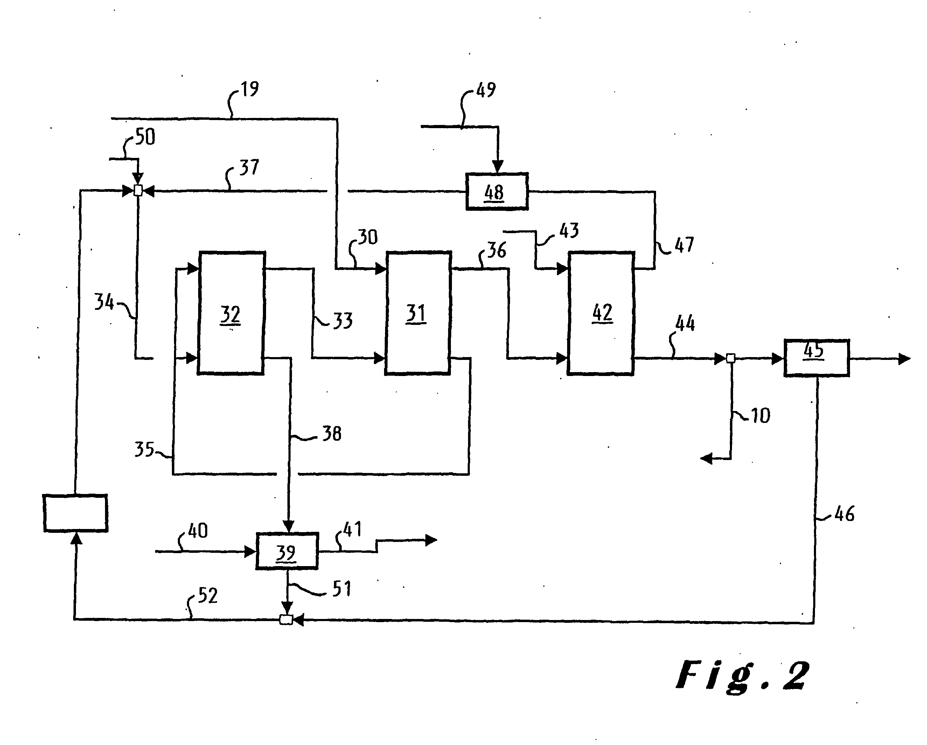

On peut aussi prévoir une variante de réalisation suivant l'invention dans une installation d'attaque phosphorique de minerai telle qu'illustrée sur la figure 1 annexée.
Un minerai de phosphate est alimenté en 1 dans un réacteur 2, dans lequel, en 3, on introduit de l'eau et un liquide d'attaque contenant des ions phosphate. Un conduit 5 permet d'évacuer du gaz CO₂ par le sommet du réacteur.
Après digestion dans le premier réacteur 2, la pulpe formée est transférée par le conduit 6 dans un premier décanteur 7, dans lequel sédimentent les grains grossiers de la pulpe formée dans le réacteur 2.
Le dépôt de grains grossiers sédimenté est évacué par le bas du décanteur en 8, pour être transféré dans un second réacteur 9, dans lequel ce dépôt est soumis à une attaque supplémentaire par un liquide d'attaque contenant des ions phosphate. Ce liquide d'attaque est ici une partie de la solution d'acide phosphorique produite suivant l'invention et elle est alimentée en 10 dans le réacteur 9. Un conduit de purge 11 permet d'évacuer le gaz CO₂ formé au sommet de ce réacteur. La pulpe formée est transférée dans un second décanteur 12. Le dépôt de ce second décanteur est évacué en 14 sous la forme d'un gâteau. Le surnageant du décanteur 12 est aspiré en 13 hors de celui-ci et va servir, dans cet exemple de réalisation, de liquide d'attaque contenant des ions phosphate à introduire dans le premier réacteur 2.
Le surnageant du premier décanteur 7 est aspiré dans un mélangeur 15 dans lequel on introduit une phase organique, par exemple un alcool aliphatique, dans l'exemple illustré du n-butanol. Cette phase organique doit de préférence être insoluble dans l'eau, plus légère que l'eau et avoir un effet de répulsion vis-à-vis des fines particules insolubles qui sont en suspension dans le surnageant du décanteur 7. Le mélange obtenu dans le mélangeur 15 est ensuite transféré dans un clarificateur 16 dans lequel les fines particules insolubles se concentrent à l'interface entre la phase organique et la phase aqueuse. Cette couche de particules fines insolubles est évacuée en 17 vers un dispositif de séchage 18 à partir duquel elles sont évacuées. La phase aqueuse clarifiée, formée d'une solution aqueuse d'acide phosphorique contenant des ions calcium en solution, est évacuée au bas du clarificateur 16 par le conduit 19, par lequel elle est transférée vers une installation de traitement par un acide, telle que l'installation illustrée à la figure 2.

### Exemple 3

### Traitement à l'acide chlorhydrique

Le liquide issu de l'attaque phosphorique et présentant en solution des ions phosphate et des ions calcium est dans cet exemple amené par le conduit 19, en 30, à une colonne de lavage 31 (v. figure 2). Dans cette colonne 31 on introduit aussi une phase organique à base par exemple de butanol qui contient déjà de l'acide phosphorique (12 % de P₂O₅) mélangé à des ions chlorure (4 % de Cl⁻).
Cette phase organique est issue de la colonne d'extraction liquide-liquide 32 et elle est alimentée à la colonne 31 par le conduit 33.

Une solution aqueuse de dihydrogénophosphate de calcium sort au bas de la colonne de lavage 31 par le conduit 35, tandis qu'au haut de la colonne, on évacue par le conduit 36 une phase organique.
Le tableau II illustre les compositions des phases à l'entrée et à la sortie de la colonne 31.

**Tableau II**

| | | P₂O₅ % | Cl % | Ca % |
|---|---|---|---|---|
| Solution de | phase organique | | | |
| départ | Flux 33 | 10,28 | 4,06 | 0,24 |
| | Phase aqueuse | | | |
| | Flux 30 | 31,26 | 0 | 3,45 |
| Après | phase organique | | | |
| l'équilibre | Flux 36 | 11 | 0,21 | 0,1227 |
| | phase aqueuse | | | |
| | Flux 35 | 26 | 5,25 | 2,86 |

| | | Fe ppm | As ppm | F ppm |
|---|---|---|---|---|
| | Flux 36 | 17,58 | < 0,1 | 1642 |
| | Flux 35 | 104,5 | 0,26 | 818 |

La colonne 32 contient plusieurs étages d'échange assurant un transfert d'ions chlorure présents dans une phase organique vers une phase aqueuse.

La phase organique de la colonne 32 est constituée de solvant butanol et elle y est introduite par le conduit 34. Cette phase organique a été préalablement chargée, par le conduit 37 en particulier, à 548 % en HCl. La phase aqueuse de la colonne 32 est constituée d'une solution aqueuse de dihydrogénophosphate de calcium issue de la colonne de lavage 31 et alimentée par le conduit 35.

Lors du passage à contre-courant des deux flux, l'acide phosphorique de la phase aqueuse passe vers la phase organique, qui est alimentée par le conduit 33 à la colonne 31. Le sel formé CaCl₂ reste au contraire dans la phase aqueuse qui est évacuée au bas de la colonne 32 par le conduit 38. Cette phase aqueuse est dépourvue de sa charge en H₃PO₄ (<1 % de P₂O₅) par l'effet de l'extraction liquide-liquide. Le flux du conduit 38 est acheminé vers un réacteur de strippage 39 pour la récupération des traces de solvant entraînées. De la vapeur est introduite dans le réacteur 39 par le conduit 40. Une solution de CaCl₂ est récupérée en 41 et les traces de solvant sont recyclées par les conduits 51 et 52 à l'alimentation en phase organique de la colonne 32.

Le tableau III illustre les compositions des phases à l'entrée et à la sortie de la colonne 32.

**Tableau III**

| | | P₂O₅ % | Cl % | Ca % |
|---|---|---|---|---|
| Solution | phase organique | | | |
| de départ | Flux 34 | 0 | 4,8467 | 0 |
| | phase aqueuse | | | |
| | Flux 35 | 19,1 | 5,8 | 2,09 |
| Après | phase organique | | | |
| l'équilibre | Flux 33 | 11,76 | 4,37 | 0,02482 |
| | phase aqueuse | | | |
| | Flux 38 | 0,92 | 13,55 | 5,04 |

| | | Fe ppm | As ppm | F ppm |
|---|---|---|---|---|
| | Flux 33 | 22,61 | < 0,1 | 652 |
| | Flux 38 | 172 | 0,015 | 1392 |

Afin de réextraire le P₂O₅ de la phase organique sortant par le conduit 36 de la colonne de lavage 31, celle-ci est introduite dans une colonne de réextraction 42 dans laquelle on introduit de l'eau par le conduit 43.

On forme ainsi une phase aqueuse d'acide phosphorique qui est évacuée par le conduit 44. Cette solution peut être partiellement recyclée vers l'attaque phosphorique par exemple par le conduit 10 (voir aussi figure 1). Elle peut aussi être concentrée dans le concentrateur 45 et être exploitée dans un processus ultérieur ou encore être recyclée par le conduit 46 vers l'alimentation de la colonne 32.

On évacue aussi de cette colonne 42, en 47, une phase organique qui est amenée au mélangeur 48 dans lequel de l'acide chlorhydrique frais est alimenté par le conduit 49. Du solvant organique frais peut être ajouté au mélange sortant du mélangeur 48 par le conduit 37, par exemple en 50.

Le tableau IV illustre les compositions des phases à l'entrée et à la sortie de la colonne 42.

**Tableau IV**

| | | P₂O₅ % | Cl % |
|---|---|---|---|
| Solution de départ | phase organique | | |
| | Flux 36 | 13,42 | 0,36 |
| | Phase aqueuse | | |
| | Flux 43 | 0 | 0 |
| Sortie | phase organique | | |
| | Flux 47 | 13,21 | 0,2464 |
| | phase aqueuse | | |
| | Flux 44 | 27,88 | 0,6668 |

Il doit être entendu que la présente invention n'est en aucune façon limitée aux modes de réalisation décrits ci-dessus et que bien des modifications peuvent y être apportées sans sortir du cadre des revendications qui suivent.

## Revendications

1. Procédé de production d'acide phosphorique, comprenant
- au moins une attaque de minerai de phosphate par un liquide d'attaque contenant des ions phosphate en solution, avec formation d'un produit d'attaque, et
- une séparation dans le produit d'attaque entre une phase solide insoluble contenant des impuretés et une phase liquide présentant en solution des ions phosphate et des ions calcium,
**caractérisé en ce qu'**il comprend en outre
- une introduction dans la phase liquide séparée d'un acide qui est plus fort que l'acide phosphorique et qui forme, avec les ions calcium précités, un sel de calcium soluble, et
- un isolement d'une solution de ce sel de calcium, non contaminée par les impuretés, avec obtention d'une solution d'acide phosphorique.

2. Procédé suivant la revendication 1, **caractérisé en ce que** le liquide d'attaque contenant des ions phosphate en solution est une solution aqueuse d'acide phosphorique.

3. Procédé suivant la revendication 2, **caractérisé en ce que** la solution aqueuse d'acide phosphorique a une teneur de 20-35 % de P₂O₅.

4. Procédé suivant l'une quelconque des revendications 1 à 3, **caractérisé en ce que** la séparation comprend une décantation dudit produit d'attaque, un soutirage de ladite phase liquide sous forme de surnageant, et une évacuation de ladite phase solide insoluble après sédimentation.

5. Procédé suivant l'une quelconque des revendications 1 à 4, **caractérisé en ce que** la phase solide insoluble séparée est formée d'une phase solide à grains grossiers qui sédimente, **en ce que** la phase liquide séparée présentant en solution des ions phosphate et des ions calcium comporte une suspension de phase solide insoluble à grains fins, et **en ce que** le procédé comprend en outre une élimination des grains fins en suspension par clarification de la phase liquide séparée, avant l'introduction de l'acide.

6. Procédé suivant l'une quelconque des revendications 1 à 5, **caractérisé en ce qu'**il comprend au moins une attaque supplémentaire de ladite phase solide séparée par un liquide d'attaque supplémentaire contenant des ions phosphate en solution, avec formation d'au moins un produit d'attaque supplémentaire, et une séparation supplémentaire de celui-ci entre une phase solide insoluble supplémentaire et une phase liquide supplémentaire contenant en solution des ions phosphate.

7. Procédé suivant l'une quelconque des revendications 1 à 6, **caractérisé en ce que** la phase liquide séparée a une teneur en P₂O₅ de 25 à 35 % et une teneur en Ca de 2 à 5 %.

8. Procédé suivant l'une quelconque des revendications 1 à 7, **caractérisé en ce qu'**au moins une partie du liquide d'attaque et/ou du liquide d'attaque supplémentaire comprend au moins une partie de la phase liquide résultant de ladite étape de séparation et/ou de ladite étape de séparation supplémentaire et/ou au moins une partie de la solution d'acide phosphorique.

9. Procédé suivant l'une des revendication 1 à 8, **caractérisé en ce que** l'acide susdit est une solution aqueuse d'acide chlorhydrique.

10. Procédé suivant l'une des revendication 1 à 9, **caractérisé en ce que** l'étape d'isolement comprend, dans la phase liquide séparée traitée par l'acide, une première extraction par un solvant organique pour former une phase organique contenant de l'acide phosphorique et une phase aqueuse contenant le sel de Ca en solution et, dans la phase organique, une deuxième extraction par de l'eau pour former une solution aqueuse d'acide phosphorique.

11. Procédé suivant l'une quelconque des revendications 1 à 10, **caractérisé en ce que** les conditions de température sont maintenues pendant tout le procédé entre 20 et 40°C et **en ce que** la concentration en P₂O₅ est maintenue entre 25 et 35 %.

12. Procédé suivant l'une quelconque des revendications 1 à 11, **caractérisé en ce qu'**il comprend en outre une étape de concentration de la solution d'acide phosphorique.

## Patentansprüche

1. Verfahren zur Herstellung von Phosphorsäure, das umfasst:
- wenigstens einen Angriff von Phosphaterz durch eine Angriffsflüssigkeit, die Phosphationen in Lösung enthält, mit Bildung eines Angriffsproduktes, und
- Trennung in dem Angriffsprodukt zwischen einer unlöslichen, festen Phase, die Verunreinigungen enthält, und einer flüssigen Phase, die in Lösung Phosphationen und Kalziumionen aufweist,
**dadurch gekennzeichnet, dass** es außerdem umfasst:
- Einführen einer Säure in die getrennte flüssige Phase, die stärker ist als Phosphorsäure und die mit den oben genannten Kalziumionen ein lösliches Kalziumsalz bildet, und
- Isolieren einer Lösung dieses nicht durch Verunreinigungen kontaminierten Kalziumsalzes, mit Erhalt einer Phosphorsäurelösung.

2. Verfahren nach Anspruch 1, **dadurch gekennzeichnet, dass** die Phosphationen in Lösung enthaltende Angriffsflüssigkeit eine wässrige Phosphorsäurelösung ist.

3. Verfahren nach Anspruch 2, **dadurch gekennzeichnet, dass** die wässrige Phosphorsäurelösung einen Gehalt von 20-35 % P₂O₅ aufweist.

4. Verfahren nach einem der Ansprüche 1 bis 3, **dadurch gekennzeichnet, dass** die Trennung ein Dekantieren des Angriffsprodukts, ein Entnehmen der flüssigen Phase in Form einer Aufschwemmung und ein Abführen der unlöslichen, festen Phase nach Sedimentierung umfasst.

5. Verfahren nach einem der Ansprüche 1 bis 4, **dadurch gekennzeichnet, dass** die getrennte, unlösliche, feste Phase gebildet ist aus einer festen Phase mit dicken Körnchen, die sedimentiert, dass die getrennte, flüssige Phase, die Phosphationen und Kalziumionen in Lösung aufweist, eine Suspension von unlöslicher, fester Phase mit feinen Körnchen aufweist, und dass das Verfahren außerdem eine Eliminierung der feinen Körnchen in Suspension durch Klären der getrennten flüssigen Phase, vor Einführen der Säure, umfasst.

6. Verfahren nach einem der Ansprüche 1 bis 5, **dadurch gekennzeichnet, dass** es wenigstens einen zusätzlichen Angriff der getrennten, festen Phase durch eine zusätzliche Angriffsflüssigkeit, die Phosphationen in Lösung enthält, mit Bilden von wenigstens einem zusätzlichen Angriffsprodukt, und eine zusätzliche Trennung von diesem zwischen einer zusätzlichen unlöslichen, festen Phase und einer zusätzlichen flüssigen Phase, die Phosphationen in Lösung enthält, umfasst.

7. Verfahren nach einem der Ansprüche 1 bis 6, **dadurch gekennzeichnet, dass** die getrennte flüssige Phase einen Gehalt an P₂O₅ von 25 bis 35 % und einen Gehalt an Ca von 2 bis 5 % aufweist.

8. Verfahren nach einem der Ansprüche 1 bis 7, **dadurch gekennzeichnet, dass** wenigstens ein Teil der Angriffsflüssigkeit und/oder der zusätzlichen Angriffsflüssigkeit wenigstens einen Teil der flüssigen Phase, die aus dem Trennungsschritt und/oder dem zusätzlichen Trennungsschritt stammt, und/oder wenigstens ein Teil der Phosphorsäurelösung aufweist.

9. Verfahren nach einem der Ansprüche 1 bis 8, **dadurch gekennzeichnet, dass** die oben genannte Säure eine wässrige Salzsäurelösung ist.

10. Verfahren nach einem der Ansprüche 1 bis 9, **dadurch gekennzeichnet, dass** der Trennungsschritt, in der durch die Säure behandelten, getrennten flüssigen Phase, ein erstes Extrahieren durch ein organisches Lösungsmittel, zum Bilden einer organischen Phase, die Phosphorsäure enthält, und einer wässrigen Phase, die Ca-Salz in Lösung enthält, und in der organischen Phase ein zweites Extrahieren durch Wasser umfasst, um eine wässrige Phosphorsäurelösung zu bilden.

11. Verfahren nach einem der Ansprüche 1 bis 10, **dadurch gekennzeichnet, dass** die Temperaturbedingungen während des gesamten Verfahrens zwischen 20 und 40°C gehalten werden, und dass die Konzentration an P₂O₅ zwischen 25 und 35 % gehalten wird.

12. Verfahren nach einem der Ansprüche 1 bis 11, **dadurch gekennzeichnet, dass** es außerdem einen Schritt zur Konzentration der Phosphorsäurelösung umfasst.

## Claims

1. Method of producing phosphoric acid, comprising
- at least one attack on a phosphate ore by an attack liquid containing phosphate ions in solution, with the formation of an attack product, and
- a separation in the attack product between an insoluble solid phase containing impurities and a liquid phase presenting phosphate ions and calcium ions in solution,
**characterised in that** it also comprises
- an introduction into the separated liquid phase of an acid which is stronger than the phosphoric acid and which forms, with the aforementioned calcium ions, a soluble calcium salt, and
- an isolation of a solution of this calcium salt, not contaminated by the impurities, with the obtaining of a solution of phosphoric acid.

2. Method according to Claim 1, **characterised in that** the attack liquid containing phosphate ions in solution is an aqueous solution of phosphoric acid.

3. Method according to Claim 2, **characterised in that** the aqueous solution of phosphoric acid has a 20-35% P₂O₅ content.

4. Method according to any one of Claims 1 to 3, **characterised in that** the separation comprises a settling of the said attack product, a drawing off of the said liquid phase in the form of supernatant, and a discharge of the said insoluble solid phase after sedimentation.

5. Method according to any one of Claims 1 to 4, **characterised in that** the separated insoluble solid phase is formed from a solid phase with coarse grains which sediments, **in that** the separated liquid phase having phosphate ions and calcium ions in solution comprises a suspension of insoluble solid phase with fine grains, and **in that** the method also comprises an elimination of the fine grains in suspension by clarification in the separated liquid phase, before the introduction of the acid.

6. Method according to any one of Claims 1 to 5, **characterised in that** it comprises at least one additional attack of the said separated solid phase by an additional attack liquid containing phosphate ions in solution, with the formation of at least one additional attack product, and an additional separation thereof between an additional insoluble solid phase and an additional liquid phase containing phosphate ions in solution.

7. Method according to any one of Claims 1 to 6, **characterised in that** the separated liquid phase has a P₂O₅ content of 25% to 35% and a Ca content of 2% to 5%.

8. Method according to any one of Claims 1 to 7, **characterised in that** at least some of the attack liquid and/or of the additional attack liquid comprises at least some of the liquid phase resulting from the said separation step and/or from the said additional separation step and/or at least some of the phosphoric acid solution.

9. Method according to one of Claims 1 to 8, **characterised in that** the above-mentioned acid is an aqueous solution of hydrochloric acid.

10. Method according to one of Claims 1 to 9, **characterised in that** the isolation step comprises, in the separated liquid phase treated with acid, a first extraction by an organic solvent in order to form an organic phase containing phosphoric acid and an aqueous phase containing the Ca salt in solution and, in the organic phase, a second extraction by water in order to form an aqueous solution of phosphoric acid.

11. Method according to any one of Claims 1 to 10, **characterised in that** the temperature conditions are maintained throughout the method between 20° and 40°C and **in that** the P₂O₅ concentration is maintained between 25% and 35%.

12. Method according to any one of Claims 1 to 11, **characterised in that** it also comprises a step of concentrating the phosphoric acid solution.
